# EUROPEAN PATENT APPLICATION

(11) **EP 4 761 474 A1**
(43) Date of publication of application: **17.06.2026**
(21) Application number: 24953264.9
(22) Date of filing: 20.09.2024
(51) Int. Cl.: H05H 6/00

(54) **TARGET DEVICE FOR ISOTOPE PRODUCTION BASED ON HIGH-CURRENT PARTICLE ACCELERATOR**

(30) Priority: 11.09.2024 CN 202411270236
(71) Applicant: INSTITUTE OF MODERN PHYSICS, CHINESE ACADEMY OF SCIENCES, Lanzhou, Gansu 730000 (CN)
(72) Inventor: HE, Yuan, Lanzhou, Gansu 730000 (CN); NIU, Haihua, Lanzhou, Gansu 730000 (CN); CAI, Hanjie, Lanzhou, Gansu 730000 (CN); JIA, Huan, Lanzhou, Gansu 730000 (CN); LI, Xiaobo, Lanzhou, Gansu 730000 (CN); QIN, Yuanshuai, Lanzhou, Gansu 730000 (CN); SONG, Shiyu, Lanzhou, Gansu 730000 (CN); ZHAO, Hongwei, Lanzhou, Gansu 730000 (CN); ZHAN, Wenlong, Lanzhou, Gansu 730000 (CN)
(74) Representative: De Ros, Alberto
(86) International application number: PCT/CN2024/119977
(87) International publication number: WO 2026/056009

(57) **Abstract**

The present application relates to the technical field of isotope production equipment, and there is provided a target device for isotope production based on a high-current particle accelerator including a target chamber and a target assembly, in which the target chamber has an inner cavity and a plurality of beam apertures arranged in an array are arranged on a surface of the target chamber facing a beam flow, and each of the beam apertures is covered with a target window; the target assembly includes a target frame being arranged in one-to-one correspondence with the target window, and in an axial direction of the beam apertures, at least one mounting position for mounting a target capsule is provided in the target frame; and both sides of the target frame are provided with openings, a plurality of target frames arranged in a preset direction are a group, side openings of the target frames in the same group correspond to each other and enclose an independent coolant flow channel with an inner wall of the target chamber, each of the target capsules has gaps on both sides in the axial direction of the beam apertures for a coolant to flow through, and a plurality of water inlet holes and water outlet holes corresponding to the plurality of coolant flow channels are respectively arranged on both sides of the target chamber. With this arrangement, it can effectively reduce the temperature rise of the target material at a high beam intensity and realize isotope production at beam intensities above a milliampere level.

## Description

### CROSS-REFERENCES TO RELATED APPLICATIONS

This application claims priority to Chinese patent application No. 202411270236.7, filed on September 11, 2024, entitled "Target device for isotope production based on high-intensity particle accelerator", which is incorporated herein by reference in its entirety.

### TECHNICAL FIELD

The present application relates to the field of isotope production equipment, and in particular to a target device for isotope production based on a high-intensity particle accelerator.

### BACKGROUND

With the development of modern medicine and nuclear medicine technologies, medical radioactive isotopes play an increasingly important role in disease diagnosis and clinical treatment. Medical radioactive isotopes are produced using three methods: reactors, accelerators, and isotope generators. Currently, the majority of global medical radioactive isotopes are still mainly produced in reactors. However, due to the widespread serious aging of research reactors, these research reactors are expected to be retired on a large scale, exacerbating the severe global shortage in medical isotope market.

Irradiating target materials with proton beams from high-energy proton accelerators is an effective approach to achieve large-scale isotope production, which can not only greatly improve the isotope production efficiency but also significantly reduce overall costs. Accelerator-based actinium-225 production has been achieved in the United States and Canada, with proton beam intensities reaching hundreds of microamperes by LANL, BNL, and TRIUMF.

The Institute of Modern Physics of the Chinese Academy of Sciences has achieved a 10 mA breakthrough in superconducting linear accelerator, laying a solid foundation for large-scale accelerator-based isotope production. To improve the total isotope yield, the beam current intensity needs to be increased to above the milliampere level. However, high-power density beam bombardment at high-intensity will cause the target material to heat up too much, and the target material may be damaged due to excessive heating. Therefore, the temperature rise of the target material is a key factor limiting the increase in current intensity.

How to reduce the temperature rise of the target material at high beam intensity and achieve isotope production at a beam intensity of milliampere level is an important issue to be solved urgently.

### SUMMARY OF THE INVENTION

An embodiment of the present application provides a target device for isotope production based on a high-intensity particle accelerator, which is used to solve the defect in the prior art that the temperature rise of the target material is too high, which limits the further improvement of the beam intensity. It can effectively reduce the temperature rise of the target material at a high beam intensity and realize isotope production at beam intensities above a milliampere level.

The present application provides a target device for isotope production based on a high-intensity particle accelerator including a target chamber and a target assembly,
in which the target chamber has an inner cavity and a plurality of beam apertures arranged in an array are arranged on a surface of the target chamber facing a beam flow, and each of the beam apertures is covered with a target window;
the target assembly includes a target frame arranged in one-to-one correspondence with the target window, and in an axial direction of the beam apertures, at least one mounting position for mounting a target capsule is provided in the target frame; and
both sides of the target frame are provided with openings, a plurality of target frames arranged in a preset direction are a group, side openings of the target frames in the same group correspond to each other and enclose an independent coolant flow channel with an inner wall of the target chamber, each of the target capsules has gaps on both sides in the axial direction of the beam apertures for a coolant to flow through, and a plurality of water inlet holes and water outlet holes corresponding to the plurality of coolant flow channels are respectively arranged on both sides of the target chamber.

According to the target device for isotope production based on the high-intensity particle accelerator provided in the present application, the plurality of coolant flow channels extends in a first direction and are arranged in a second direction, where the first direction is perpendicular to the second direction; and the plurality of target frames arranged in the first direction are a group and are located on an extension path of the same coolant flow channel.

According to the target device for isotope production based on the high-intensity particle accelerator provided in the present application, the target chamber is provided with a plurality of mounting holes on one side in the second direction, where the plurality of mounting holes is arranged in the first direction, and
a plurality of the target assemblies is provided, each of the target assemblies includes a plurality of target frames connected sequentially in the second direction, and the target assemblies are plugged into and sealed with the mounting holes.

According to the target device for isotope production based on the high-intensity particle accelerator provided in the present application, the target assembly further includes a sealing seat, where the target frame located at an end is fixedly connected to the sealing seat, the cross-section of the sealing seat is gradually tapered in a direction close to the target frame, and the mounting hole gradually expands in a direction from an inside to an outside of the target chamber.

According to the target device for isotope production based on the high-intensity particle accelerator provided in the present application, the target device further includes a locking assembly for locking the target assembly and the target chamber.

According to the target device for isotope production based on the high-intensity particle accelerator provided in the present application, the locking assembly includes a pair of locking tongues capable of elastically extending and retracting, and locking bases arranged at intervals are fixedly connected to the target chamber, where locking grooves are provided on the locking bases, and the pair of locking tongues are configured to respectively engage with the locking grooves of adjacent locking bases.

According to the target device for isotope production based on the high-intensity particle accelerator provided in the present application, the locking tongues are slidably connected to the target assembly, and the pair of locking tongues are slidable towards or away from each other, where the locking assembly further includes an elastic member elastically cooperating with the locking tongues to drive the pair of locking tongues to have a tendency to move away from each other.

According to the target device for isotope production based on the high-intensity particle accelerator provided in the present application, the elastic member includes a spring, where the locking assembly further includes a guide column fixedly connected to the locking tongue, an axis of the guide column is parallel to a sliding direction of the locking tongue, the guide columns on the pair of locking tongues are arranged opposite to each other, and two ends of the spring are respectively sleeved on the guide columns of the pair of locking tongues.

According to the target device for isotope production based on the high-intensity particle accelerator provided in the present application, an inner wall of the target frame is provided with a plurality of groups of embedding grooves arranged at intervals in the axial direction of the beam aperture to form a plurality of mounting positions,
where two embedding grooves in each group of the embedding grooves are arranged in corresponding positions and are respectively arranged on two opposing inner walls of the target frame, one end of the embedding groove near the water inlet hole extends through a side portion of the target frame, and another end of the embedding groove near the water outlet hole is sealed.

According to the target device for isotope production based on the high-intensity particle accelerator provided in the present application, one side of the target frame towards the target window is arranged to be open, and another side of the target frame is provided with a beam blocking plate.

According to the target device for isotope production based on the high-intensity particle accelerator provided in the present application, an annular groove is provided on an outer peripheral surface of the sealing seat, and a sealing ring is embedded in the groove.

According to the target device for isotope production based on the high-intensity particle accelerator provided in the present application, the target capsule includes a support ring, a first metal film, a target material, and a second metal film, where the first metal film and the second metal film respectively cover two ends of a central through hole of the support ring, and the target material is encapsulated in a space surrounded by the support ring, the first metal film, and the second metal film.

According to the target device for isotope production based on the high-intensity particle accelerator provided in the present application, the thicknesses of the first metal film and the second metal film are 100 µm to 400 µm.

According to the target device for isotope production based on the high-intensity particle accelerator provided in the present application, the target material includes a sheet shape, a block shape, or a granular shape.

According to the target device for isotope production based on the high-intensity particle accelerator provided in the present application, the target device further includes an inlet water distribution pipe and an outlet water distribution pipe, where a plurality of channels for respectively connecting the plurality of water inlet holes are arranged in the inlet water distribution pipe, and a plurality of channels for respectively connecting the plurality of water outlet holes are arranged in the outlet water distribution pipe, and
the cross-sectional shapes of the channels in the inlet water distribution pipe and outlet water distribution pipe match the shape of the coolant flow channel.

According to the target device for isotope production based on the high-intensity particle accelerator provided in the present application, the target device further includes a water inlet pipe and a water outlet pipe, where the water inlet pipe is connected to the water inlet distribution pipe through a water inlet variable diameter pipe, and the water outlet pipe is connected to the water outlet distribution pipe through a water outlet variable diameter pipe, and
the cross-sectional shape of a water inlet of the water inlet variable diameter pipe matches the cross-sectional shape of the water inlet pipe, the cross-sectional shape of a water outlet of the water inlet variable diameter pipe matches the cross-sectional shape of a channel inside the inlet water distribution pipe, the cross-sectional shape of a water inlet of the water outlet variable diameter pipe matches the cross-sectional shape of a channel inside the outlet water distribution pipe, and the cross-sectional shape of a water outlet of the water outlet variable diameter pipe matches the cross-sectional shape of the water outlet pipe.

According to the target device for isotope production based on the high-intensity particle accelerator provided in the present application, the water inlet pipe and the water outlet pipe are both configured as curved pipes.

According to the target device for isotope production based on the high-intensity particle accelerator provided in the present application, a water inlet of the water inlet pipe is connected to a water inlet quick-release connector, and a water outlet of the water outlet pipe is connected to a water outlet quick-release connector.

According to the target device for isotope production based on the high-intensity particle accelerator provided in the present application, the target device further includes a water inlet pipe support seat, on which a plurality of through holes corresponding to the number and position of the water inlet pipes are provided, and the water inlet pipes pass through the through holes of the water inlet pipe support seat.

According to the target device for isotope production based on the high-intensity particle accelerator provided in the present application, the target device further includes a water outlet pipe support seat, on which a plurality of through holes corresponding to the number and position of the water outlet pipes are provided, and the water outlet pipes pass through the through holes of the water outlet pipe support seat.

In the target device for isotope production based on the high-intensity particle accelerator provided in the present application, the target capsules are arranged in a single-layer or multi-layer array in the target chamber, and the beam is scanned into a plurality of sub-beams in one-to-one correspondence with the plurality of beam apertures on the target chamber in combination with the accelerator beam fixed-point scanning technology, thereby being able to increase the beam intensity to above the milliampere level, and ensuring the production efficiency of the isotope. Further, the array arrangement reduces the lateral size of each target capsule, which is conducive to reduce the difficulty of manufacturing and post-processing of the isotope production target capsule. During the production process, the coolant is diverted into a plurality of coolant flow channels through the water inlet holes, and the plurality of target capsules located in each coolant flow channel are separately forced by water cooling through the independent coolant flow channels, thereby effectively improving the forced convection cooling efficiency of the target capsule. In addition, each target capsule has gaps on both sides in the axial direction of the beam aperture for the coolant to pass through, so that both sides of each target capsule facing and away from the beam aperture can be in full contact with the coolant. In this way, the thermal power on the target capsule can be quickly removed, the temperature rise of the target capsule can be reduced, and damage to the target capsule due to excessive heating can be avoided as much as possible, which effectively solves the problem of difficulty in increasing the beam intensity due to excessive temperature rise of the target capsule, and realizes large-scale production of isotopes with milliampere flux levels.

### BRIEF DESCRIPTION OF THE DRAWINGS

In order to illustrate the technical solutions in the present application or in the prior art more clearly, a brief introduction will be given below to the drawings required for describing the embodiments or the prior art. Obviously, the drawings described below are some embodiments of the present application, and for person of ordinary skilled in the art, other drawings can be obtained based on these drawings without any creative efforts.
FIG. 1 is a schematic diagram of a structure of a target device for isotope production based on a high-intensity particle accelerator according to an embodiment of the present application.
FIG. 2 is a cross-sectional view of an overall structure of a target device for isotope production based on a high-intensity particle accelerator according to an embodiment of the present application.
FIG. 3 is a schematic diagram of an overall structure of a target chamber according to an embodiment of the present application.
FIG. 4 is a cross-sectional view of an overall structure of a target chamber according to an embodiment of the present application.
FIG. 5 is a schematic diagram of an overall structure of a target assembly according to an embodiment of the present application.
FIG. 6 is a first cross-sectional view of an overall structure of a target assembly according to an embodiment of the present application.
FIG. 7 is a second cross-sectional view of an overall structure of a target assembly according to an embodiment of the present application.
FIG. 8 is a partial enlarged view of position A in FIG. 7.
FIG. 9 is a schematic diagram of an overall structure of a target frame according to an embodiment of the present application.
FIG. 10 is a schematic diagram of an overall structure of a target capsule according to an embodiment of the present application.
FIG. 11 is a cross-sectional view of a target capsule according to an embodiment of the present application.

### REFERENCE NUMERALS

1, target chamber; 11, target chamber front plate; 111, beam aperture; 112, water guide strip; 12, target chamber rear plate; 13, target chamber upper plate; 131, mounting hole; 132, locking seat; 14, target chamber bottom plate; 141, target chamber support; 15, target chamber left side plate; 151, water outlet hole; 16, target chamber right side plate; 161, water inlet hole; 17, target window; 2, target assembly; 21, sealing seat; 22, sliding connector; 23, locking assembly; 231, locking tongue; 232, guide column; 233, spring; 24, target frame; 25, target capsule; 251, support ring; 252, first metal film; 253, target material; 254, second metal film; 26, beam blocking plate; 3, inlet water distribution pipe; 31, water inlet guide plate; 4, water inlet variable diameter pipe; 5, water inlet pipe; 51, water inlet pipe support base; 52, water inlet quick release connector; 6, outlet water distribution pipe; 61, water outlet guide plate; 7, water outlet variable diameter pipe; 8, water outlet pipe; 81, water outlet pipe support base; 82, water outlet quick release connector.

### DETAILED DESCRIPTION

In order to further clarify the objectives, technical solutions and advantages of the present application, the following clearly and completely describes the technical solutions of this application in combination with the drawings. Apparently, the described embodiments represent only a portion of the embodiments of this application, and not all of them. All other embodiments derived by persons of ordinary skilled in the art based on the embodiments of this application without creative efforts shall fall within the protection scope of this application.

In order to facilitate understanding of a target device for isotope production based on a high-intensity particle accelerator provided by the present application, the application background is first introduced. Irradiating target materials with proton beams from high-energy proton accelerators is an effective technical approach to achieve large-scale isotope production, which can not only greatly improve isotope production efficiency but also significantly reduce overall costs. Currently, the United States and Canada have achieved isotope production of proton beam intensities at a level of hundreds of microamperes.

In recent years, with the rapid development of superconducting linear accelerator technologies, the beam intensity has achieved a breakthrough in the milliampere level. In order to improve the total isotope yield, the beam current intensity needs to be increased to above the milliampere level. However, high-power density beam bombardment at high-intensity will cause the target material to heat up too much, and the target material may be damaged due to excessive heating. Therefore, the temperature rise of the target material is a key factor limiting the increase in current intensity.

How to reduce the temperature rise of the target material at high beam intensity and achieve isotope production at a beam intensity of milliampere level is an important issue to be solved urgently.

To address the above problems, the embodiments of the present application provide a target device for isotope production based on a high-intensity particle accelerator, which can effectively reduce the temperature rise of the target material and achieve large-scale production of isotopes at the milliampere current level.

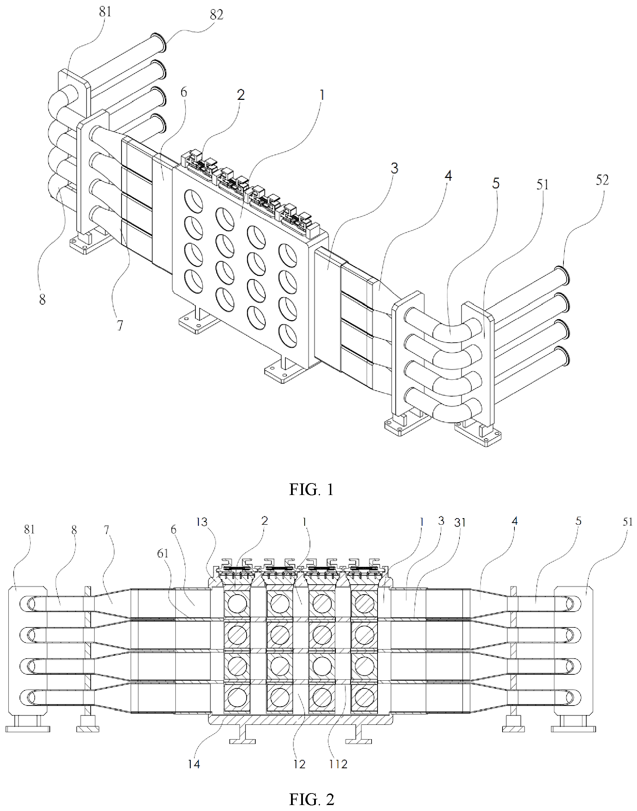

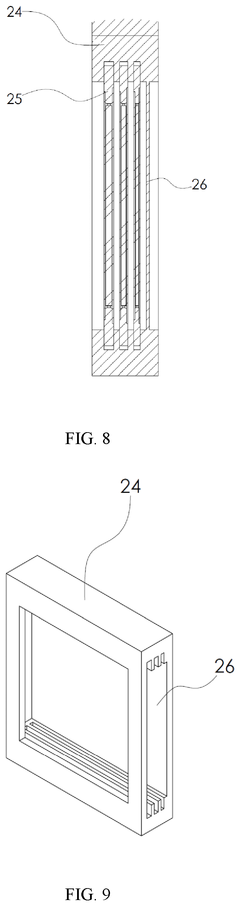

A target device for isotope production based on a high-intensity particle accelerator according to the present application will be described below with reference to FIG. 1 to FIG. 11.

Referring to FIG. 1 to FIG. 3, a target device for isotope production based on a high-intensity particle accelerator includes a target chamber 1 and a target assembly 2. Herein, the target chamber 1 has an inner cavity and is provided with a plurality of beam apertures 111 arranged in an array on a surface facing a beam flow, and each of the beam apertures 111 is covered with a target window 17. The target assembly 2 includes a target frame 24 being arranged in one-to-one correspondence with the target window 17, and in an axial direction of the beam apertures 111, at least one mounting position for mounting a target capsule 25 is provided in the target frame 24.

A side of the target frame 24 is provided with an opening, a plurality of target frames 24 arranged in a preset direction are a group, side openings of the target frames 24 in the same group correspond to each other and enclose an independent coolant flow channel with an inner wall of the target chamber 1, and each of the target capsules 25 has gaps on both sides in the axis direction of the beam apertures 111 for a coolant to flow through. A plurality of water inlet holes 161 and water outlet holes 151 corresponding to the plurality of coolant flow channels are respectively arranged on sides of the target chamber 1.

In a specific application scenario, the target capsules 25 are arranged in a single-layer or multi-layer array in the target chamber 1, and the beam is scanned into a plurality of sub-beams one-to-one correspondence with the plurality of beam apertures 111 on the target chamber 1 in combination with the accelerator beam fixed-point scanning technology, thereby being able to increase the beam intensity to above the milliampere level, and ensuring the production efficiency of the isotope. Further, the array arrangement reduces the lateral size of each target capsule 25, which is conducive to reduce the difficulty of manufacturing and post-processing of the isotope production target capsule 25. During the production process, the coolant is diverted into a plurality of coolant flow channels through the water inlet holes 161, and the plurality of target capsules 25 located in each coolant flow channel are separately forced by water cooling through the independent coolant flow channels, thereby effectively improving the forced convection cooling efficiency of the target capsule 25. In addition, each target capsule 25 has gaps on both sides in the axial direction of the beam aperture 111 for the coolant to pass through, so that both sides of each target capsule 25 facing and away from the beam aperture 111 can be in full contact with the coolant. In this way, the thermal power on the target capsule 25 can be quickly removed, the temperature rise of the target capsule 25 can be reduced, and the damage to the target capsule 25 due to excessive heating can be avoided as much as possible, which effectively solves the problem of difficulty in increasing the beam intensity due to excessive temperature rise of the target capsule 25, and realizes large-scale production of isotopes with milliampere flux levels.

The specific structure of each member in the target device will be described in detail below with reference to the drawings.

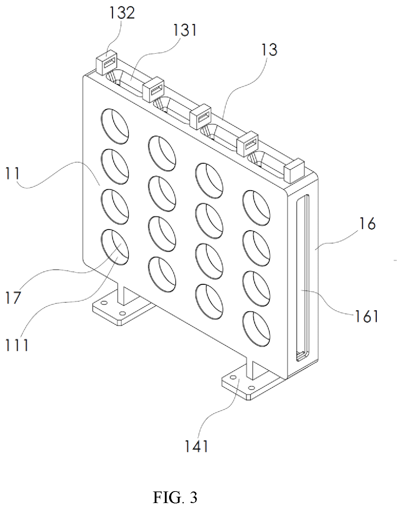

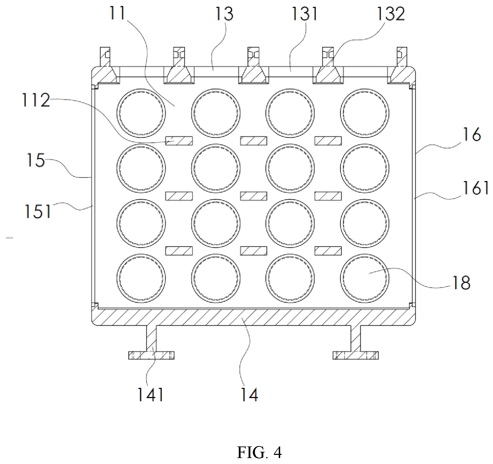

Referring to FIGS. 3 and 4, the target chamber 1 is an overall rectangular structure, which includes a target chamber front plate 11, a target chamber rear plate 12, a target chamber upper plate 13, a target chamber bottom plate 14, a target chamber left side plate 15 and a target chamber right side plate 16. An inner cavity of the target chamber 1 is formed by enclosing the target chamber front plate 11, the target chamber rear plate 12, the target chamber upper cover plate 13, the target chamber bottom plate 14, the target chamber left side plate 15 and the target chamber right side plate 16. A target chamber support 141 is fixedly connected to the bottom of the target chamber 1 for providing bottom support for the target chamber 1.

The target chamber front plate 11 serves as a side of the target chamber 1 facing the beam flow. The beam apertures 111 are provided on the target chamber front plate 11, and the shape of the beam apertures 111 can be circular, oval or polygonal. The beam apertures 111 can be arranged in a rectangular array or an annular array. In addition, according to the specific number of beam apertures 111, the form of the array in which they are arranged will vary. In some examples, a plurality of beam apertures 111 can be arranged in a matrix in the form of 3 × 3, 4 × 4, 4 × 5, 5 × 5, or the like.

The specific shape, number and arrangement of the beam apertures 111 can be adaptively designed according to actual production requirements. In this embodiment, the target chamber front plate 11 is provided with 16 circular beam apertures 111, and the 16 beam apertures 111 are arranged in a 4 × 4 matrix in a first direction and a second direction perpendicular to each other on the target chamber front plate 11.

The target chamber front plate 11 is equipped with target windows 17 corresponding to the number of beam apertures 111, and the target windows 17 are fixedly connected to the inner wall of the target chamber front plate 11 and cover the beam apertures 111, so that the space of the target chamber 1 is closed. The material of the target windows 17 and the connection method with the target chamber front plate 11 can be selected according to actual requirements. Specifically, the material used for the target windows 17 is a metal sheet with good thermal conductivity, high melting point, good strength, good ductility, and easy welding, such as Inconel-718 or a titanium alloy, which can be connected to the target chamber front plate 11 by welding or a flange. A small-sized array arrangement can reduce the thermal power of the beam deposited on each target window 17 and the water pressure it withstands, thereby extending the service life of the target window 17.

Corresponding to the beam apertures 111 arranged in a matrix, a plurality of target frames 17 arranged in the first direction form a group, and a plurality of groups of target frames 17 and the inner wall of the target chamber 1 enclose a plurality of coolant flow channels extending in the first direction and arranged in the second direction.

Specifically, the first direction is formed as the horizontal direction of the target chamber 1, and the second direction is formed as the vertical direction of the target chamber 1. The plurality of coolant flow channels extend in the horizontal direction of the target chamber 1 and are arranged in the vertical direction of the target chamber 1. The plurality of target capsules 25 arranged in the horizontal direction are located in the same coolant flow channel, the water inlet holes 161 are arranged on the right side plate 16 of the target chamber, and the water outlet holes 151 are arranged on the left side plate 15 of the target chamber.

The coolant flow channel is formed within the target chamber 1. In detail, the coolant flow channel is formed by the inner wall of the target chamber 1 and the target frame 24. The target frame 24 has openings on both sides in the first direction, and the plurality of side openings of target frames 24 arranged in the first direction correspond to each other, thereby forming a passage for the coolant to flow through. During operation, the coolant flows into the target frame 24 along one side in the first direction and flows out through the other side.

In order to remain the vertically arranged adjacent coolant flow channels as relatively independent as possible, the plurality of target frames 24 arranged in the second direction are sequentially connected as a whole. Specifically, the plurality of target frames 24 arranged in the second direction can be processed separately and then connected together, or can be integrally processed. The target chamber 1 further includes a water guide strip 112 located in the inner cavity of the target chamber 1 and arranged between four adjacent beam apertures 111. Two ends of each water guide strip 112 cooperate with two adjacent target frames 24 arranged in the first direction, for separating two adjacent coolant flow channels arranged in the second direction. With this arrangement, the target frame 24 itself and the water guide strip 112 can jointly function to separate, effectively preventing the vertical flow of the coolant in the coolant flow channel, ensuring the independence between two adjacent coolant flow channels, and further ensuring the forced convection cooling efficiency.

In an embodiment of the present application, a mounting hole 131 is provided on one side of the target chamber 1 in the second direction, and the plurality of mounting holes 131 are arranged in the first direction. A plurality of target assemblies 2 are provided, each target assembly 2 includes a plurality of target frames 24 sequentially connected in the second direction, and the target assembly 2 is plugged into and sealed with the mounting holes 131.

Specifically, the number of target assemblies 2 corresponds to the number of target windows 17 arranged horizontally, and the number of target frames 24 on each target assembly 2 corresponds to the number of target windows 17 arranged vertically. In this way, after the target windows 17 of the target assembly 2 are inserted into the target chamber 1 through the mounting hole 131, the arrangement, position and number of the target frames 24 correspond to those of the target windows 17.

In this embodiment, four mounting holes 131 are provided on the target chamber upper plate 13 and are arranged side by side, and four target assemblies 2 are provided. Each target assembly 2 includes four target frames 24 arranged vertically, and the target frame 24 on the target assembly 2 can be inserted into the target chamber 1 through the mounting holes 131. After the target frames 24 of the target assembly 2 are inserted into the target chamber 1, the plurality of target frames 24 are arranged in a 4 × 4 matrix and the positions thereof correspond to the positions of the target windows 17.

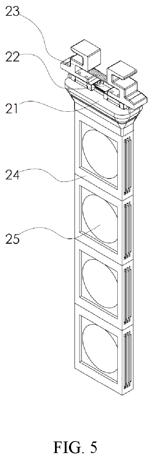

Referring to FIG. 5 to FIG. 7, in order to facilitate mounting of the target assembly 2 and sealing thereof with the mounting hole 131, in an embodiment of the present application, the target assembly 2 further includes a sealing seat 21, and the target frame 24 at the end is fixedly connected to the bottom of the sealing seat 21. The cross-section of the sealing seat 21 is gradually tapered in a direction close to the target frame 24, so that the two opposite side surfaces of the sealing seat 21 are inclined surfaces, giving the sealing seat 21 an overall wedge-shaped or trapezoidal structure. The shape of the mounting hole 131 is provided as a wedge-shaped hole that matches the shape of the sealing seat 21. That is, the mounting hole 131 gradually expands from the inside to the outside of the target chamber 1, so that positioning and mounting of the target assembly 2 can be achieved quickly and accurately.

An annular groove is provided on the outer peripheral surface of the sealing seat 21, and a sealing ring is embedded in the groove. After the sealing seat 21 is inserted into the mounting hole 131, the sealing ring is pressed tightly against the hole wall of the mounting hole 131, ensuring that the space in the target chamber 1 is sealed, and preventing leakage of the radioactive cooling water.

Specifically, the sealing ring can be a Fluororubber O-type sealing ring or a metal sealing ring.

Referring to FIG. 3 and FIG. 5, in order to facilitate the connection between the target assembly 2 and the target chamber 1, in an embodiment of the present application, the target device further includes a locking assembly 23 for locking the target assembly 2 and the target chamber 1.

In a specific embodiment of the present application, the locking assembly 23 includes a pair of locking tongues 231 capable of elastically extending and retracting. A locking seat 132 is fixedly connected to the target chamber 1, adjacent locking seats 132 are arranged at intervals, a locking groove is provided on the locking seat 132, and the pair of locking tongues 231 of the locking assembly 23 are used to respectively engage with the locking grooves on the adjacent locking seats 132.

In an actual application scenario, when installing the target assembly 2, the target window 17 is inserted into the target chamber 1 through the mounting hole 131. Under the action of gravity of the target assembly 2 or external force, the sealing ring is tightly sealed with the mounting hole 131. During the mounting process of the target assembly 2, the locking tongue 231 is subjected to a force to be retracted. After the target assembly 2 is mounted in place, the locking tongue 231 aligns with the position of the locking groove on the adjacent locking seat 132. The force applied to the locking tongue 231 is then released, and the locking tongue 231 extends out and is embedded into the locking groove, so that the target assembly 2 can be conveniently and quickly mounted on the target chamber 1. In addition, the target assembly 2 can be remotely removed and replaced by controlling the retraction of the locking tongue 231 through a robot or an electric drive clamp, thereby avoiding high-dose irradiation damage caused by a short-distance operation of a person, and ensuring the personnel safety.

Of course, a gripping portion can also be provided on the top of the locking tongue 231, and a robot or an electric drive clamp can grip or clamp the gripping portion to control the movement of the locking tongue 231. After the target assembly 2 is mounted on the target chamber 1, the gripping portion protrudes from the top of the locking seat 132, so that the robot or the electric drive clamp can control the locking tongue 231.

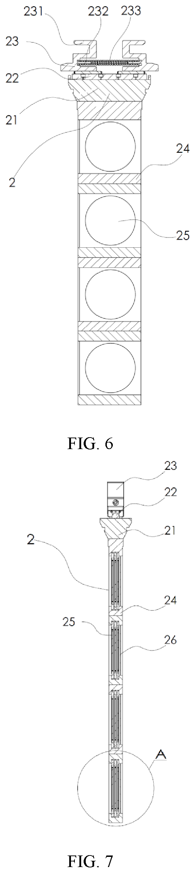

In an embodiment of the present application, referring to FIG. 5 and FIG. 6, locking seats 132 are located at both ends of the mounting hole 131 in the first direction. Locking tongues 231 are slidably connected to the target assembly 2, and the pair of locking tongues 231 are slidable towards or away from each other. The locking assembly 23 further includes an elastic member elastically cooperating with the locking tongues 231 to drive the pair of locking tongues 231 to have a tendency to move away from each other. When the pair of locking tongues 231 approach each other, the elastic member is deformed elastically, such that the locking tongues 231 are in an elastically deformed state. The distance between two locking tongues 231 is no greater than the distance between two locking seats 132, so as to ensure that the locking tongues 231 can be smoothly embedded between two locking seats 132. When the elastic member is recovered from the deformation, the two locking tongues 231 are driven to move away from each other, and the two locking tongues 231 extend out and are inserted into the locking grooves of the locking seats 132.

Specifically, the locking tongue 231 is connected to the target assembly 2 via a sliding connector 22. The sliding connector 22 includes a guide rail and a slider which are fitted slidably. The guide rail is fixedly connected to the sealing seat 21, and the slider is fixedly connected to the bottom of the locking tongue 231. Through the sliding connector 22, the sliding connection of the locking tongue 231 on the target assembly 2 can be realized, and the sliding direction of the locking tongue 231 can be constrained and guided.

The elastic member can be a spring 233, and both ends of the spring 233 are respectively connected to two locking tongues 231. In order to ensure the smoothness of the extension and retraction of the spring 233, the locking assembly 23 further includes a guide column 232 fixedly connected to the locking tongue 231, and an axis of the guide column 232 is parallel to a sliding direction of the locking tongue 231. The guide columns 232 on a pair of locking tongues 231 are arranged opposite to each other, and two ends of the spring 233 are respectively sleeved on the guide columns 232 of the pair of locking tongues 231. The guide columns 232 can constrain and guide the extension and retraction of the spring 233, thereby ensuring the smoothness and stability of the extension and retraction of the spring 233.

By adopting the above technical solution, when the target assembly 2 is installed, the locking tongues 231 on both sides are pressed toward the center by a robot or a clamp. The two locking tongues 231 move toward the center, the spring 233 is compressed, and then the target frame 24 of the target assembly 2 is inserted into the target chamber 1. After the target assembly 2 is mounted in place, the robot or the clamp releases the locking tongues 231. The spring 233 is recovered from deformation and drives the two locking tongues 231 away from each other to be inserted into the locking holes of the locking seats 132 on both sides, so that the positioning and sealing of the target assembly 2 and the target chamber 1 are achieved. The disassembly process of the target assembly 2 is opposite to the above process.

The structure of the target frame 24 will be described in detail below with reference to the drawings.

Referring to FIG. 7 to FIG. 9, the target frame 24 is an overall rectangular frame structure, which has an opening on one side facing the target window 17 and a beam blocking plate 26 on the opposite side, for blocking and absorbing any remaining waste beam after target shooting. After the target capsule 25 is connected to the target frame 24, there are gaps between the beam blocking plate 26 and the target capsule 25, and between the beam blocking plate 26 and the target chamber rear plate 12. When the coolant flows through the target frame 24, both sides of the beam blocking plate 26 can fully contact the coolant, realizing double-sided cooling of the beam blocking plate 26, and ensuring the cooling effect of the beam blocking plate 26 under high thermal power density at the end of the beam flow.

A plurality of groups of embedding grooves are arranged on the inner wall of the target frame 24, and the plurality of groups of embedding grooves are arranged at intervals in the axial direction of the beam aperture 111. Two embedding grooves in each group of embedding grooves are arranged opposite to each other and are respectively located on two inner walls of the target frame 24 in the second direction, so as to form a plurality of mounting positions for mounting the target capsule 25. One end of the embedding groove near the water inlet hole 161 extends through the side opening of the target frame 24 for forming an insertion end, and another end of the embedding groove near the water outlet hole 151 is sealed for forming a stop end. When installing the target capsule 25, the target capsule 25 is inserted into the embedding groove from the insertion end, and the stop end can position the target capsule 25, preventing the target capsule 25 from escaping from the target frame 24 under the influence of the coolant. After the target capsule 25 is mounted in the target frame 24, one side of the target capsule 25 faces the target window 17, while the other side faces away from the target window 17. The plurality of groups of embedding grooves in each target frame 24 enable a single target frame 24 to be installed with multiple layers of target capsules 25 in the beam direction, which is beneficial to reduce the thermal power on a single target capsule 25 and increase the effective cooling area inside an individual target frame 24, thereby improving the beam density that an individual target position can borne.

It should be noted that the multi-layer target capsules 25 installed in the target frame 24 can be set to have the same thickness or different thicknesses according to the beam energy parameters.

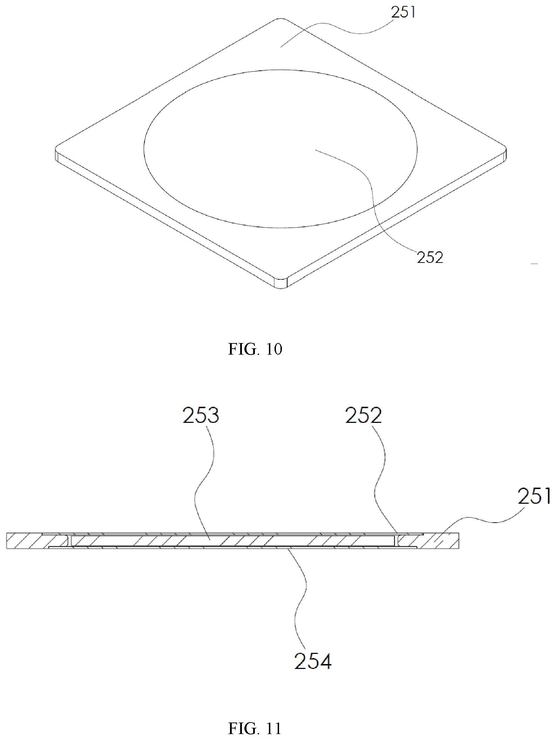

In an embodiment of the present application, referring to FIG. 10 and FIG. 11, the target capsule 25 includes a support ring 251, a first metal film 252, a target material 253, and a second metal film 254. The first metal film 252 and the second metal film 254 respectively cover two ends of a central through hole of the support ring 251, and the target material 253 is encapsulated in a space enclosed by the support ring 251, the first metal film 252 and the second metal film 254. The first metal film 252 and the second metal film 254 are preferably made of metal materials with good thermal conductivity, a high melting point, good strength, good ductility, and easy welding, such as Inconel -718, tantalum, niobium or titanium. The thicknesses of the first metal film 252 and the second metal film 254 are set to be between one hundred micrometers and four hundred micrometers according to the energy of the beam flow. The morphology of the target material 253 includes a sheet shape, a block shape and a granular shape, which can be selected according to actual requirements. In this embodiment, the target material 253 is a natural thorium target with a millimeter thickness. There are certain gaps between the thorium target and the metal film, and between the thorium target and the metal support ring 251 to facilitate packaging.

In an embodiment of the present application, referring to FIG. 1 and FIG. 2, the target device further includes an inlet water distribution pipe 3 and an outlet water distribution pipe 6. A plurality of water inlet guide plates 31 arranged at intervals in the second direction are arranged in the inlet water distribution pipe 3, so that a plurality of channels for respectively connecting the plurality of water inlet holes 161 are formed in the inlet water distribution pipe 3. A plurality of water outlet guide plates 61 arranged at intervals in the second direction are arranged in the outlet water distribution pipe 6, so that a plurality of channels for respectively connecting the plurality of water outlet holes 151 are formed in the outlet water distribution pipe 6.

The cross-sectional shape of the channel in the inlet water distribution pipe 3 and the outlet water distribution pipe 6 matches the shape of the coolant flow channel to ensure the uniformity of the cooling flow field of the target capsule 25. In this embodiment, the target chamber 1 is rectangular and the target frame 24 is of a rectangular frame structure, such that the cross section of the coolant flow channel enclosed by the inner wall of the target chamber 1 and the target frame 24 is rectangular. Therefore, the cross sections of the inlet water distribution pipe 3 and the outlet water distribution pipe 6 are both set to be rectangular, a plurality of water inlet guide plates 31 divide the inlet water distribution pipe 3 into a rectangular channel matching the coolant flow channel, and a plurality of water outlet guide plates 61 divide the outlet water distribution pipe 6 into a rectangular channel matching the coolant flow channel.

In order to facilitate interfacing of the target device with an external water circulation system, the target device further includes a water inlet pipe 5 and a water outlet pipe 8. The water inlet pipe 5 is connected to the inlet water distribution pipe 3 through a water inlet variable diameter pipe 4, and the water outlet pipe 8 is connected to the outlet water distribution pipe 6 through a water outlet variable diameter pipe 7. The cross-sectional shape of the water inlet of the water inlet variable diameter pipe 4 matches the cross-sectional shape of the water inlet pipe 5, and the cross-sectional shape of the water outlet of the water inlet variable diameter pipe 4 matches the cross-sectional shape of the channel in the inlet water distribution pipe 3. The cross-sectional shape of the water inlet of the water outlet variable diameter pipe 7 matches the cross-sectional shape of the channel in the outlet water distribution pipe 6, and the cross-sectional shape of the water outlet of the water outlet variable diameter pipe 7 matches the cross-sectional shape of the water outlet pipe 8. In this way, the transition between the inlet water distribution pipe 3 and the outlet water distribution pipe 6 from a non-standard interface to a standard interface is realized, so as to ensure that the coolant forms a relatively uniform flow field distribution before entering the target chamber 1 and better matches the rectangular flow channel in the target chamber 1.

In order to achieve quick connection/disconnection of the target device to/from the external water circulation system, a water inlet of the water inlet pipe 5 is connected to a water inlet quick release connector 52, and a water outlet of the water outlet pipe 8 is connected to a water outlet quick release connector 82. Specifically, for the water inlet quick release connector 52 and the water outlet quick release connector 82, a quick release flange is adopted for connecting to an external cooling water circulation device. When the entire equipment of the target chamber 1 needs to be replaced or removed, quick disconnection/connection of the target device from/to the external cooling water circulation device can be achieved through the quick release flange, thereby improving the installation and disassembly efficiency of the entire equipment.

Specifically, the water inlet pipe 5 and the water outlet pipe 8 can be set to be curved pipes according to actual requirements.

Specifically, the target device further includes a water inlet pipe support base 51 and a water outlet pipe support base 81. At least one group of the water inlet pipe support bases 51 are arranged along the extension path of the water inlet pipe 5, the water inlet pipe support base 51 is provided with a plurality of through holes corresponding to the number and position of the water inlet pipe 5, and the water inlet pipe 5 passes through the through holes of the water inlet pipe support base 51. At least one group of the water outlet pipe support bases 81 are arranged along the extension path of the water outlet pipe 8, the water outlet pipe support base 81 is provided with a plurality of through holes corresponding to the number and position of the water outlet pipe 8, and the water outlet pipe 8 passes through the through holes of the water outlet pipe support base 81. The water inlet pipe 5 and the water outlet pipe 8 can be supported and fixed by the water inlet pipe support base 51 and the water outlet pipe support base 81.

It can be understood that different embodiments or examples and features of different embodiments or examples described in this specification can be combined and integrated by those skilled in the art without contradicting each other.

According to the target device for isotope production based on the high-intensity particle accelerator provided by the embodiment of the present application, the target capsule 25 is arranged in a single-layer or multi-layer array in the target chamber 1, and the beam is scanned into a plurality of sub-beams in one-to-one correspondence with the plurality of beam apertures 111 on the target chamber 1 in combination with the accelerator beam fixed-point scanning technology, thereby being able to increase the beam intensity to above the milliampere level, and ensuring the production efficiency of the isotope. Further, the array arrangement reduces the lateral size of each target capsule 25, which is conducive to reduce the difficulty of manufacturing and post-processing of the isotope production target capsule 25. During the production process, the coolant is diverted into a plurality of coolant flow channels through the water inlet holes 161, and the plurality of target capsules 25 located in each coolant flow channel are separately forced by water cooling through the independent coolant flow channels, thereby effectively improving the forced convection cooling efficiency of the target capsule 25. In addition, each target capsule 25 has gaps on both sides in the axial direction of the beam aperture 111 for the coolant to pass through, so that the both sides of each target capsule 25 facing and away from the beam aperture 111 can be in full contact with the coolant. In this way, the thermal power on the target capsule 25 can be quickly removed, the temperature rise of the target capsule 25 can be reduced, and the damage to the target capsule 25 due to excessive heating can be avoided as much as possible, which effectively solves the problem of difficulty in increasing the beam intensity due to excessive temperature rise of the target capsule 25, and realizes large-scale production of isotopes with milliampere flux levels.

Finally, it should be noted that the above embodiments are only used to illustrate the technical solutions of the present application and are not limited thereto. Although the present application is described in detail with reference to the foregoing embodiments, a person of ordinary skill in the art should understand that the person may still modify the technical solutions described in the foregoing embodiments, or equivalently replace some of the technical features therein. These modifications or replacements do not make the essence of the corresponding technical solutions depart from the spirit and scope of the technical solutions of the embodiments of the present application.

## Claims

1. A target device for isotope production based on a high-intensity particle accelerator, comprising a target chamber (1) and a target assembly (2),
wherein the target chamber (1) has an inner cavity and a plurality of beam apertures (111) arranged in an array are arranged on a surface of the target chamber (1) facing a beam flow, and each of the beam apertures (111) is covered with a target window (17);
the target assembly (2) comprises a target frame (24) arranged in one-to-one correspondence with the target window (17), and in an axial direction of the beam aperture (111), at least one mounting position for mounting a target capsule (25) is provided in the target frame (24); and
both sides of the target frame (24) are provided with openings, a plurality of target frames (24) arranged in a preset direction are a group, side openings of the target frames (24) in a same group correspond to each other and enclose an independent coolant flow channel with an inner wall of the target chamber (1), each of the target capsules (25) has gaps on both sides in the axial direction of the beam apertures (111) for a coolant to flow through, and a plurality of water inlet holes (161) and water outlet holes (151) corresponding to the plurality of coolant flow channels are respectively arranged on both sides of the target chamber (1).

2. The target device for isotope production based on the high-intensity particle accelerator of claim 1, wherein the plurality of coolant flow channels extends in a first direction and are arranged in a second direction, wherein the first direction is perpendicular to the second direction; and the plurality of target frames (24) arranged in the first direction are a group and are located on an extension path of a same coolant flow channel.

3. The target device for isotope production based on the high-intensity particle accelerator of claim 2, wherein the target chamber (1) is provided with a plurality of mounting holes (131) on one side in the second direction, wherein the plurality of mounting holes (131) is arranged in the first direction, and
a plurality of the target assemblies (2) is provided, each of the target assemblies (2) comprises a plurality of target frames (24) connected sequentially in the second direction, and the target assemblies (2) are plugged into and sealed with the mounting holes (131).

4. The target device for isotope production based on the high-intensity particle accelerator of claim 3, wherein the target assembly (2) further comprises a sealing seat (21), wherein the target frame (24) located at an end is fixedly connected to the sealing seat (21), a cross-section of the sealing seat (21) is gradually tapered in a direction close to the target frame (24), and the mounting hole (131) gradually expands from an inside to an outside of the target chamber (1).

5. The target device for isotope production based on the high-intensity particle accelerator of claim 3, further comprising a locking assembly (23) for locking the target assembly (2) and the target chamber (1).

6. The target device for isotope production based on the high-intensity particle accelerator of claim 5, wherein the locking assembly (23) comprises a pair of locking tongues (231) capable of elastically extending and retracting, and locking bases (132) arranged at intervals are fixedly connected to the target chamber (1), wherein locking grooves are provided on the locking bases (132), and the pair of locking tongues (231) are configured to respectively engage with locking grooves of adjacent locking bases (132).

7. The target device for isotope production based on the high-intensity particle accelerator of claim 6, wherein the locking tongues (231) are slidably connected to the target assembly (2), and the pair of locking tongues (231) are slidable towards or away from each other, wherein the locking assembly (23) further comprises an elastic member elastically cooperating with the locking tongues (231) to drive the pair of locking tongues (231) to have a tendency to move away from each other.

8. The target device for isotope production based on the high-intensity particle accelerator of claim 7, wherein the elastic member comprises a spring (233), wherein the locking assembly (23) further comprises a guide column (232) fixedly connected to the locking tongue (231), an axis of the guide column (232) is parallel to a sliding direction of the locking tongue (231), the guide columns (232) on the pair of locking tongues (231) are arranged opposite to each other, and two ends of the spring (233) are respectively sleeved on the guide columns (232) of the pair of locking tongues (231).

9. The target device for isotope production based on a high-intensity particle accelerator of claim 1, wherein an inner wall of the target frame (24) is provided with a plurality of groups of embedding grooves arranged at intervals in the axial direction of the beam aperture (111) to form a plurality of mounting positions,
wherein two embedding grooves in each group of the embedding grooves are arranged in corresponding positions and are respectively arranged on two opposite inner walls of the target frame (24), one end of the embedding groove near the water inlet hole (161) extends through a side portion of the target frame (24), and another end of the embedding groove near the water outlet hole (151) is sealed.

10. The target device for isotope production based on the high-intensity particle accelerator of claim 1, wherein one side of the target frame (24) towards the target window (17) is arranged to be open, and another side of the target frame (24) is provided with a beam blocking plate (26).
